# EUROPEAN PATENT APPLICATION

(11) **EP 2 325 760 A2**
(43) Date of publication of application: **25.05.2011**
(21) Application number: 10192272.2
(22) Date of filing: 23.11.2010
(51) Int. Cl.: G06F 17/30

(54) **Representation of media types**

(30) Priority: 23.11.2009 US 263787 P
(71) Applicant: Thomas, Edward Eric, Kanata ON K2K 2A5 (CA); Kaila, Ashish, Mississauga, ON L4W 0B4 (CA)
(72) Inventor: Thomas, Edward Eric, Kanata ON K2K 2A5 (CA); Kaila, Ashish, Mississauga, ON L4W 0B4 (CA)
(74) Representative: Roberts, Gwilym Vaughan

(57) **Abstract**

Apparatus and methods to control selection of media content provide a mechanism to enhance user interaction with multimedia devices. Additional apparatus, systems, and methods are disclosed.

## Description

### Related Application(s)

This application claims the benefit of priority under 35 U.S.C, 119(e) to United States Provisional Patent Application Serial No. 611263,787 filed 23 November 2009, which is incorporated herein by reference in its entirety.

### Background

Access to information is an important factor in the activities of individuals in modern society. Improvements to the flow of information enhance one's ability to interact with others, to respond to changing needs, and to avail oneself of enjoyment from processing various media based information.

### Brief Description of the Drawings

Embodiments are illustrated by way of example and not limitation in the figures of the accompanying drawings in which:

Figure 1 is a functional block diagram of a system for managing media content, according to various embodiments.

Figure 2 shows a block diagram of an architecture for transferring media content between media synchronization engines of a system and mobile wireless communications devices, according to various embodiments.

Figure 3 shows a block diagram of a system that can synchronize the transfer of media files with a destination device, according to various embodiments.

Figure 4 shows a functional structure to operate on data in a system, according to various embodiments.

Figure 5 shows a structure for media representation in a system, according to various embodiments.

Figure 6 shows an embodiment of features of a method of operating with respect to media files in a system.

Figure 7 shows an embodiment of features of a method of operating with respect to media files in a system.

Figure 8 depicts a diagram of a system, according to various embodiments.

### Detailed Description

The following detailed description refers to the accompanying drawings that show, by way of illustration, details and embodiments in which the disclosure may be practiced. These embodiments are described in sufficient detail to enable those skilled in the art to practice embodiments of the disclosure. Other embodiments may be utilized and structural, logical, and electrical changes may be made without departing from the disclosed subject matter. The various embodiments disclosed herein are not necessarily mutually exclusive, as some embodiments can be combined with one or more other embodiments to form new embodiments. The following detailed description is, therefore, not to be taken in a limiting sense.

In various embodiments, media content is managed in a system. Systems and methods for managing media content may be configured such that the management may be conducted with limited user interaction and, in various embodiments, the system may perform essentially autonomously. Media is a form of general communication, information, or entertainment, which is typically intended to be used by a large audience, thought not limited to a large audience. Various media, or media types, may include, but are not limited to, music, videos, movies, music videos, television shows, interactive applications, audiobooks such as electronic books (e-books), podcasts, games, personal presentations, and other presentations. Each form of media may be referred to as media content or media art. An individual item of such media may be referred to as media content or media art. Media content may include content in any media format. Some examples of content may include, but are not limited to, audio files, video files, image files, podcast files, e-book files, multimedia files, files/folders that include one or more media files selected individually from a collection of different media files generated by a commercial entity, and files/folders that include one or more media files generated by a non-commercial entity. Audio file formats may include, but are not limited to, MP3, AIFF, WAV, MPEG-4, AAC, and Apple Lossless. Other example file formats for media content include, but are not limited to, files having extensions doc, dot, wpd, txt, xls, pdf, ppt, jpg, jpeg, png, bmp, gif, html, htm, zip, tif, tiff, wmf, and variations thereof. Associated with an item of media art that is stored or processed on an apparatus is a media file, which when operated on by an associated playing device (player) provides an output that can be presented as communication, information, entertainment, other presentations, or combinations thereof for the user of the player.

Systems that manage media content may include various apparatus such as computer systems or other systems having hardware, software, and/or hardware and software to manage media content. In various embodiments, a personal computer (PC) can be used to manage media content and associated media files. A personal computer, as is generally known, herein refers to computing devices having an operating system (OS) such that use of the personal computer may be conducted by individuals having little or no knowledge of the basics of the underlying hardware and software that operate the PC and whose operation may be conducted without individuals typically authoring computer programs to operate the computer. Portable computers may include portable personal computers. An example of a portable PC is a laptop computer or notebook computer that typically has a display screen, keyboard, underlying hardware and software, and a display pointing device that are all integrated in a housing that can easily be carried by an individual. Some personal digital assistants (PDAs) may be viewed as a type of portable computer. In various embodiments, a PC may include instrumentality for managing media content and instrumentality to operate as a wireless server. A wireless server is a server configuration that communicates with an entity over a channel established by the entities in a wireless network. Other devices, such as mobile wireless communication devices, can be implemented to manage media content.

Various instrumentalities can be realized in hardware implementations, software implementations, and combinations of hardware and software implementations. Some portions of the instrumentalities may be described in terms of algorithms and symbolic representations of operations on data bits within a machine memory. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. The instrumentality may operate to process, compute, calculate, determine, display, and/or conduct other activities correlated to processes of a machine, such as a computer system or similar electronic computing device, that manipulates and transforms data represented as physical (electronic) quantities within the machine's registers and memories into other data similarly represented as physical quantities within the machine memories or registers or other such information storage, transmission, or display devices. The instrumentality may provide personalized capabilities, provide a pathway to other content, or combinations thereof. The instrumentality may use distributed applications, different numbers and types of software based components that couple two or more applications to enable data transfer between the applications, hardware to provide services from a number of different sources, and may be realized on a variety of platforms such as servers and content management systems. The instrumentality may include or provide access to subroutine code, code libraries, application program interfaces such as interpreters utilizing Java EE™, Simple DirectMedia Layer™ (SDL) and DirectX™, combinations thereof, or other such electronic based functionalities.

In various embodiments, a PC manages media content in relationship to one or more mobile devices. Each mobile device can play media files and can interact with the PC with respect to the management of media content on the respective mobile device. In various embodiments, the mobile devices include instrumentalities similar to those of the PC to manage the media content on the mobile device, to browse media files in one or more PCs, and to engage with a PC in interactive management of media content on the mobile device, on the PC, and on other mobile devices in which the media content may be shared. Other apparatus configured with hardware, software, and/or hardware and software to function in a similar manner as the PC to manage media content may be used in conjunction with the mobile devices. The mobile devices may be mobile wireless communications devices. The mobile wireless communications devices may include, but are not limited to, mobile telephones, portable computers, PDAs, and other devices that may be conveniently carried by a user and provide wireless communication. Mobile telephones include wireless communication devices that have generally been referred to as cell phones. Mobile telephones may include a wide range of communication devices from portable phones with limited functionality beyond voice communication to portable phones capable of providing functionality of a personal computer, which portable phones may be referred to as smart phones.

In an embodiment, a system organizes information associated with media content from multiple media sources into a single unified library file. The information may be organized as indexed information. Managing media content is not limited to a single library file. In various embodiments, more than one library file may be utilized. Access to a library file can be provided to a number of mobile devices. The access may be provided as full access or limited access. For example, access to a library file by a mobile device may be limited to a mobile device based on whether the mobile device has one or more media players to operate on the media content. Other criteria may be used to limit access to a mobile device. In various embodiments, the library file is maintained on the system and is accessed from the mobile device remotely. In various embodiments, a library file or a modified version of a library file can be transferred to the mobile device and the mobile device can access the library file locally. The library file can be used by the mobile device to transfer media content from one or more media sources to the mobile device. The mobile device may have wireless capabilities. The mobile device may be a mobile wireless communication device.

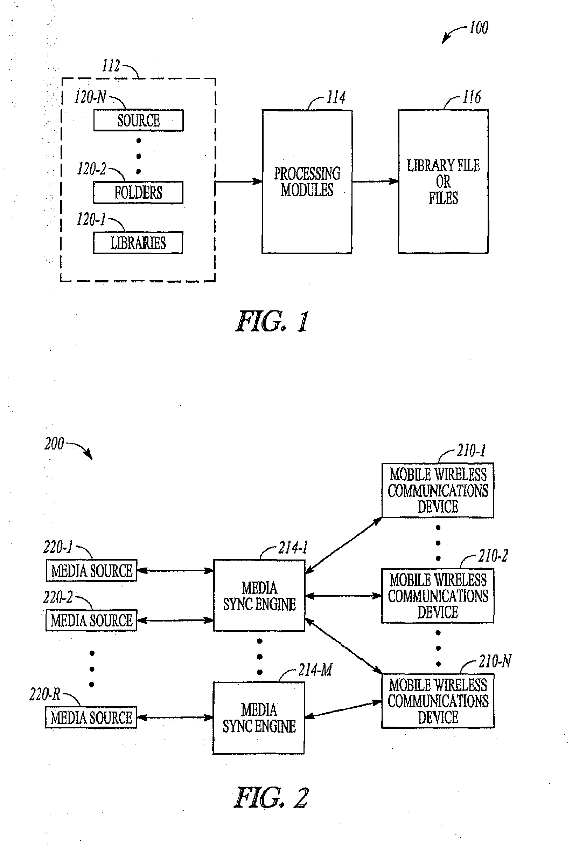

Figure 1 is a functional block diagram of a system 100 for managing media content. System 100 includes inputs 112, processing modules 114, and outputs 116. Inputs 112 include one or more media sources 120-1, 120-2 ... 120-N of media content (also herein referred to as "media sources," "media source," "sources," or "source"). Media content may include content in any media format. Some examples of content may include, but are not limited to, audio files, video files, image files, and multimedia files. Audio file formats may include, but are not limited to, MP3, AIFF, WAV, MPEG-4, AAC, and Apple Lossless. Other example file formats for media content include, but are not limited to, files having extensions doc, dot, wpd, txt, xls, pdf, ppt, jpg, jpeg, png, bmp, gif, html, htm, zip, tif, tiff, wmf, and variations thereof.

Inputs 112 of media sources may include media libraries 120-1 for media players such as, but not limited to, libraries for iTunes® audio players, Windows Media Player® (WMP), RealPlayert®, and other players. Each library may include collections of various media content. A collection is a subset of the files in a library. The collections may include references to the files. Each collection may refer to anywhere from zero files to all of the files in the library. An example of a collection of a music library is a playlist. In various embodiments, inputs 112 of media content may include files within one or more folders 120-2 on a single computer system or on multiple computer systems.

Processing modules 114 include software and/or hardware that can transfer media content from media sources to devices that use the associated media. Processing modules include instrumentality to operate as a "connector," which means that the processing modules interface with media sources to collect information associated with a media file configured to operate with a specific media player. Processing modules may be arranged with a set of connectors, one for each type of media player incorporated in system 100 or used by mobile devices whose media content is managed by system 100. Processing modules 114 may include connectors to interact with mobile wireless communication devices, where the mobile wireless communication devices can also be a source of media content. Processing modules 114 may use, but are not limited to, a Windows COM interface or a XML file when connecting to various media sources. In addition, processing modules 114 may create a representation (for example, a library or libraries of information regarding the media content) of the media content available from multiple media sources. In various embodiments, media content may include information with respect to another media file that is played by a media player. For instance, a jpeg (Joint Photographic Experts Group) file may be a file of album art for songs on an album, where the media files of the songs are played on a media player.

In various embodiments, output 116 from processing modules 114 is a representation created by processing modules 114. The representation may also be maintained by processing modules 114. Output 116 may include device specific data for a mobile wireless communication device, a media player, or other destination device. Output 116 may comprise metadata, such as metadata based on user preferences or device settings. Generally, metadata is information about data. Various media content may be metadata with respect to other media content. For example, a file having a jpg file format may provide information regarding an audio file having a mp3 file format such that the jpg file is metadata for the mp3 file.

In an example embodiment, the representation may be any means for identifying the content of the media source files. In some embodiments, a library file 116 created by processing modules 114 contains metadata for the media content available in the one or more media sources 120-1 ... 120-N, but omits the actual media content. Library file 116 may be organized using a standard format that represents the information contained in the media sources. In various embodiments, the standard format can be a compressed format and/or a format that is substantially smaller than the media library itself. For example, a media library with 30 GB of audio files may be presented by processing modules 114 in a file that may be 200 KB.

In operation, system 100 for managing media content shown in Figure 1 creates a representation of the media content available in one or more media sources 120-1 ... 120-N and provides a means for accessing the media content by any destination device with a media player, such as a mobile wireless communications device. The destination device may browse the representation and may select individual media content items to copy or transfer from the media source to the destination device. After selection, all or a portion of the media content item may be transferred to the destination device and may be played on a media player on the destination device. In various embodiments, system 100 brings content from multiple media sources into a single unified library 116 and pushes out device specific metadata from the single library to the specific destination device.

Figure 2 is a block diagram of an architecture for transferring media content between media synchronization engines 214-1 ... 214-M of a system 200 and mobile wireless communications devices 210-1 ... 210-N. The media content can be provided from media sources 220-1 ... 220-R. Media sources 220-1 ... 220-R can reside on system 200. The media content in media sources 220-1 ... 220-R may be provided from various sources external to system 200. For instance, media sources 220-1 ... 220-R can be media libraries resident on system 200 that are created as libraries to store media files provided by media stores accessed on the Internet. Media sources 220-1 ... 220-R may contain media files loaded in the system by a user from a portable storage medium such as, but not limited to, a CD or a DVD Mobile wireless communications devices 210-1 .. 210-N may also be media sources. Media synchronization engines 214-1 ... 214-M (also referred to as media sync engines or media sync applications) that operate in the transferal of a media file may also operate to manage a media library and a metadata library file associated with the media file. The media file can be operated on by a media player to provide the media content for visual and/or audio presentation to a user of system 200 or one or more of mobile wireless communications devices 210-1 ... 210-N.

Media sync engines 214-1 ... 214--M can create representations (such as a library file or files) identifying media content available from multiple media sources and provide data from the library to mobile wireless communications devices 210-1 ... 210-N. In an embodiment, a media sync engine is an example of a processing module shown in Figure 1. In various embodiments, a media sync engine provides a method to synchronize a media library, such as an iTunes®digital music library, a Windows Media Player® digital music library, or other commercial based library, with a smart phone. The files may be transferred using a wireless connection, such as a wireless wide area network, a wireless local area network such as a Wi-Fi network, a personal wireless connection such as a wireless USB connection. The files may be transferred using a wired connection such as a high speed USB connection.

Mobile wireless communications devices 210 may include, but are not limited to, mobile telephones, portable computers, personal digital assistants (PDAs), media players and other devices that may be conveniently carried by a user and provide wireless communication. Mobile telephones include wireless communication devices that have generally been referred to as cell phones. Mobile telephones may include a wide range of communication devices from portable phones with limited functionality beyond voice communication to portable phones capable of providing the functionality of a personal computer. Multiple devices of different types / capabilities may transfer media content using one or more media sync engines,

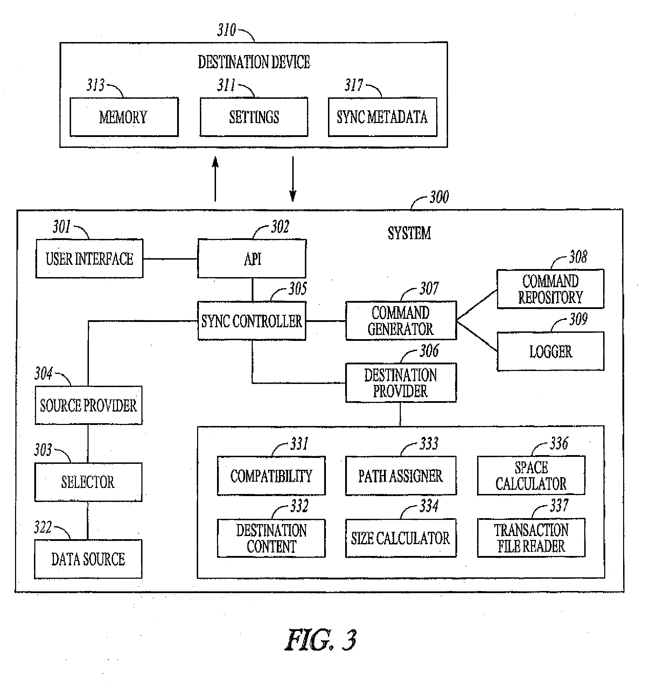

Figure 3 illustrates a block diagram of a system 300 that can synchronize media files with a destination device 310. System 300 can include the functionality of the processing modules 114 shown in Figure 1 and the functionality of media sync engines 214-*i* of Figure 2, according to an example embodiment. System 300 can include a user interface (UI or GUI for graphic user interface) 301, an application programming interface (API) 302, a selector 303, a source provider 304, a sync controller 305, a destination provider 306, and a command generator 307. System 300 may reside on a PC that interacts with one or more mobile wireless devices that are destination devices for media file sync.

System 300 can provide destination device 310 with media files from data source 322. Data source 322 can include a library, which may be arranged as a multimedia library, a music library, a video library, an e-book library, a documents library, or combinations thereof. Though data source 322 is shown as a single entity, it can be configured as multiple data sources. The multiple data sources of data source 322 can operate under different protocols using different data formats. Data source 322 can be configured similar to or identical to sources 120-1,120-2 ... 120-N of Figure 1 and/or media sources 220-1, 220-2 ... 220-R of Figure 2. Data source 322 can be configured as a data source within system 300, such as a memory system or a database. Data source 322 can be configured external to but accessible by system 300.

API 302, selector 303, source provider 304, sync controller 305, destination provider 306, and command generator 307 can operate to perform multiple tasks, including, but not limited to, functioning as a sync module that includes instrumentality to conduct synchronization operations with one or more destination devices 310. Sync operations can include adding media files to and removing media files from one or more destination devices 310. System 300 can interact with destination device 310 to determine its identity and acquire information on the availability of allocated media storage on the mobile device.

Destination device 310 includes settings 311, memory 313, and sync metadata 317, which components can provide and/or store information corresponding to a sync operation with system 300. Sync metadata 317 can include metadata associated with media content stored and operated on by a media player on destination device 310. Settings 311 can include such information as a personal identification number (PIN). Other information stored in settings 311 can include, but is not limited to, identification of the OS of destination device 310, a user chosen name for destination device 310, and an identification of the version of media sync that destination device 310 is using with respect to system 300.

System 300 includes user interface 301 configured as a mechanism for a user of system 300 to interact with system 300 including providing input for a sync operation with destination device 310. A user of system 300 may receive information regarding the settings of destination device 310 via user interface 301 along with information regarding media content accessible to the user via processes of system 300 or via destination device 310. However, sync controller 305 can manage operation of a sync session such that user related operations are conducted in a background process separate from the user interface. Background operations can be conducted without user interaction, but may use user-related information that is stored in system 300 or stored in a database accessible by system 300.

Selector 303 can include a set of connectors, one or more for each type of media player incorporated in system 300 or in destination devices 310. Selector 303, using appropriate connectors, can identify specific instances of a particular type of library in data source 322. Selector 303 can use its connectors to perform a discovery function that finds individual libraries. A connector for a particular library is capable of communicating with the particular library or a file in the library using a corresponding application programming interface, protocols, file formats, etc. When an individual library is discovered, the connector can retrieve media collections from that instance of the individual library. The connectors of selector 303 may include an iTunes connector, a WMP connector, a RealPlayer connector, an autofill connector, a connector for a specific source of e-books, and various other connectors correlated to instrumentality for operating on the respective media files to provide a presentation to the user of system 300. An individual connector may be configured as a combination of a read only connector and a writeable connector. A writeable connector may perform such activities as adding a user-assigned rating for a song, creating a playlist, editing a playlist, deleting a song, etc. An autofill connector, for example, can be realized as a combination of connectors to perform discovery functions across different libraries during an autofill operation of system 300 for a specific destination device 310.

Selector 303 provides a group mechanism, in that, it functions to maintain account of selections made from data source 322. For example, if music item is chosen, selector 300 maintains the ID of the chosen music item including such information as the number of music tracks in the chosen music item. Selector 303 can be arranged to group various pieces of information data regarding chosen media files.

Source provider 304 determines the type of media data included in a sync session, where it functions as a finder, providing a discovery mechanism for connectors. Functioning as a finder, source provider 304 can identify what connectors of selector 303 are available for processing. The available connectors may register with source provider 304. If a separate connector is used for each type of library, the particular connectors that are discovered by source provider 304 can determine what type of libraries are in system 300. Source provider 304 can be arranged as an aggregation of components (one or many instances) for providing discovery mechanism.

Destination provider 306 is similar to source provider 304 except that destination provider operates with respect to the types of media data on a particular destination device 310 with which system 300 enters into a sync session. Destination provider 306 can find connectors to interact with one or more destination devices 310, where destination devices 310 can also be sources of media content. Content from destination device 310 can be read into a database of system 300 with the content represented from destination provider 306 correlated to destination device 310.

Destination provider 306 can operate using a set of modules including compatibility 331, destination content 332, path assigner 333, size calculator 334, space calculator 336, and transaction file reader 337. Compatibility 331 can operate to provide information and/or conduct actions to reconcile compatibility such as with different versions of hardware and/or software on designation device 310. Path assigner 333 can operate as a component that calculates unique destination path of a to-be-copied media taking name collisions, associated with different media files, and operating system (OS) path limits into consideration. Size calculator 334 can operate as a component that calculates a future size of a media on a specified destination device 310 where it will be copied. Size calculator 334 can take into account compression (e.g. scaling of images), disk differences (as in physical cluster size of disk) and aids in projecting these estimates on a progress bar displayer by UI 301. Space calculator 336 can operate as to provide input as to an amount of space available for syncing. Transaction file reader 337 can operate to provide a transaction file of what was transacted as part of sync to a specific destination device 310 in a previous sync operation. Transaction file reader 337 can be used to determine a delta to be copied as part of next sync operation to the specific destination device 310. Destination content 332 can operate to provide an identification of what media content already resides on destination device 310 as part of the last sync with the specified destination device 310.

Sync controller 305 provides a path assignment function. It essentially maps the media item from data source 322 to destination device 310. Once the mapping is complete, the appropriate commands and command format is formed by command generator 307 to conduct the sync session with destination device 310.

Command generator 307 can be configured to operate in conjunction with a command repository 308 and a logger 309. Command repository 308 can operate as a repository of commands holding commands to be executed at various stages during a sync operation. Command repository 308 can be configured as an aggregation of components (one or many instances) to hold various commands and/or sets of commands. For example, command repository 308 can include a set of commands for a cleanup stage that implements the deletion of non-essential and temporary files. In another example, command repository 308 can include a set of commands for a copy stage that implements the copying of data and metadata (e.g. album artwork). Logger 309 can operate as a component that logs sync activities and usage statistics, for example, for diagnostics purposes and beta statistics.

API 302 can include instrumentality for managing functions from selection to command generation for a sync session, such that it can provide overall management of a sync session between system 300 and destination device 310. API 302 can provide a unified interface to multiple sources/libraries of data source 322. Under direction of API 302, media collected for a sync session can be collected in a sync set.

The components of system 300 shown in Figure 3 as independent entities can be implemented in an integrated format. The various components of system 300 can be realized as software, hardware, and combinations of software and hardware. The software is implemented as instructions stored in a machine-readable storage medium that can be executed by one or more processors of system 300.

Embodiments, as illustrated in Figures 1-3, and similar embodiments may be implemented as a desktop application to transfer media content from multiple sources to a mobile wireless device or other destination device. The desktop application for managing media content may be launched on a PC. The desktop application may be automatically launched on startup of the PC. The desktop application may be launched on detection of a device connection to the PC. In various embodiments, a user may launch the desktop application. Alternatively, embodiments, as illustrated in Figures 1-3, and similar embodiments may be implemented to allow a mobile wireless device to update content already present on the mobile wireless device with media content from multiple sources.

In various embodiments, a system managing media content can be structured to operate to provide a number of different features. Content from multiple media sources may be entered into a single unified library and device specific metadata may be pushed out from the single library. A library file in a format to provide a compact representation of media metadata may be generated as output of processing modules, similar to processing modules discussed with respect to Figures 1-3. Varying schema can be used for choices to select, group, and rearrange data in the representation in the file format. Various features of a managing system may include maintaining representations of original source identifications so that an identifier such as an ID, a path, etc. may be used to track/manage information regarding different multiple sources of substantially the same media content. Various features of a managing system may include injecting or modifying metadata for a media file during transfer to a device. Examples of injected metadata may include album art, volume settings and other device settings, user preferences, and other parameters.

Various features of the managing system may include a simplified user interface on the PC for transferring information to the mobile device and representing information that is present on the mobile device. The UI may generate representations to provide criteria for handling user selection of media content that exceeds device capacity. In various embodiments, applications in the PC may use the information in the library of the PC to autonomously handle user selection of media content that exceeds device capacity. The UI can provide an automatic fill function, referred to herein as autofill, for a user to select such that the PC automatically handles selection of media content to transfer to the mobile device. In the various embodiments, a mobile device may be a mobile wireless communication device. A mobile wireless communication device may include instrumentality to manage media content in substantially the same manner as a PC.

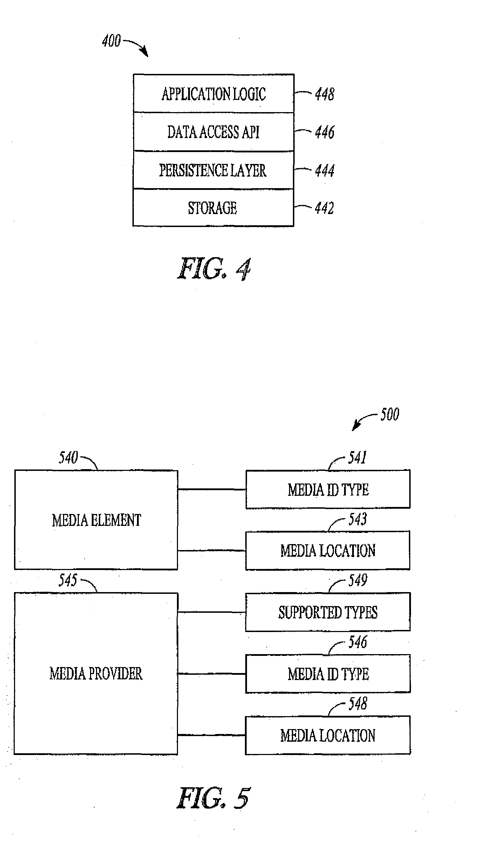

Figure 4 shows a functional structure 400 to operate on data in a system, in accordance with various embodiments. Functional structure 400 includes a storage layer 442, a persistence layer 444, a data access API layer 446, and an application logic layer 448. Storage layer 442 can include flat files and/or one or more databases. Persistence layer 444 can include statements such as file read/write or sql (structured query language) statements. Persistence layer 444 can be configured as one or more persistence layers and can have one or more adaptors. An adaptor essentially takes a representation and places it another format. For instance, persistence layer 444 can include an adaptor that operates on a list of fields to write the fields to a file. Optionally, the adaptor may write the fields with,a specific arrangement of the fields in the file. Persistence layer 444 can include an adaptor to provide a versioning mechanism such that data from one version can be mapped into appropriate fields of another version. Different adaptors in different persistence layers can be used to write data from a system, such as system 300 to a specific destination device 310 of the architecture of Figure 300. An adaptor can be used to facilitate data transfer over a wide area wireless network. Another adaptor can be used to facilitate data transfer over a local area wireless network, such as a Wi-Fi network or a personal wireless connection that is essentially direct. Another adaptor can be used to facilitate data transfer over a local wired connection, such as a USB connection.

Data access API layer 446 can provide functionality to obtain specific enumerated media from a specified media library. Application Logic 448 provides the functionality to load the obtained specific enumerated media from the specified media library to an appropriate location or structure for use by the system. Such a location can be at storage level 442. A file for transfer to a destination device form the system can be loaded using this functionality. In various embodiments, adaptors of persistence layer 444 can be used to read from and write to storage layer 442 with respect to data access API layer 446 and application logic 448 without being limited by the manner in which the data is stored.

Figure 5 shows a structure 500 for media representation in a system, in accordance with various embodiments. Structure 500 includes a media element 540 and a media providers 545. Each media related item in a storage structure in or accessible to a system can be represented by a media element. Media element 540 includes at least a media identification (ID) type 541 and a media location 543. Media identification (ID) type 541 provides a unique ID for media element 540 that defines and recognizes it as a distinct media type. Media location 543 provides a location at which the media location can be accessed. Media location 543 may be represented as a data path to the system.

Media provider 545 provides a mechanism to organize media in the system. Media provider 545, itself, is a media element and has its own media ID type 546 that is unique and a media location 548 at which it can be found. In addition, media provider 545 can include other media elements. Media provider 545 can include a collection of media elements in the system, where the media elements are based on media provider 545 for the collection.

For example, consider a music album having two tracks of music, T1 and T2. Tracks T1 and T2 are media elements and, as such, have media ID type ID1 and media location L1, represented as {ID1,L1,and media ID type ID2 and media location L2, represented as {ID2, L2}, respectively. Tracks T1 and T2 are provided by the music album, which is a media provider, which can be presented by media ID type ID3 and media location L3, which designates the music album as a media element. Since the music album includes the two tracks it can be represented by {ID3, L3,{{ID1, L1}, {ID2, L2}}. If the music album is a compilation of music tracks by different recording artists, each recording artist has its own unique media ID type /media location pair, {IDk, Ll}. In addition, each of the tracks can be music written by different song writers who are also different from the recording artist, where each song writer has its own unique media ID type /media location pair, {{ID*m,* L*n*}. Thus, the album, as a media provider, can be represented by its own unique media ID type /media location pair and all the associated unique media ID type /media location pairs related to the tracks and the different types of artists. In a system, what constitutes a media element for a media type can be set to a number of items, where the number can be increased in the system to provide a desired level of granularity to manage media data.

As another example, consider a movie, which can be represented as a media element {ID4, L4}. The movie includes artist (actors), which are media elements that can be represented by media elements {{ID*i*,L*j*},...{ID*i*,L*j*}} The movie is then also a media provider that can be represented by {ID4,L4, {{ID*i*,L*j*},... {ID*i*, L*j*}}}. Associated with the movie are a director, a writer, a producer, and various other media elements: As a result, the representation for the movie, as a media provider, includes a unique media ID type 541 and a media location 543 for each of these media elements associated with the movie.

As can be seen from the examples above, the representation of media provider 545 can be provided to include its own unique media ID type /media location pair and all the associated unique media ID type /media location pairs provided by media provider 545. The collection of associated unique media ID type provides an identification of the supported types 549 of media elements in the representation of media provider 545. Supported types 549 provide a mechanism for querying media content and information about the media content in a system having structure 500.

A unified library of media content for a system is a media provider. A library of a specific media type, such as music, video, photo, e-book, or others, is a media element of the unified library and is a media provider. A library of a specific type of media player of music (libraries for audio players such as iTunes®, Windows Media Player®(WMP), RealPlayer®; and other players) is a media element of a music library and a media provider for the albums, individual music tracks (songs), playlists, different music genre for the library of the specific type of media player. A similar nesting can be described for other high level media types, such as videos, photo, e-books, etc, except that the individual media providers and media elements for these higher level media types differ as the nesting increases. The unique media ID along with the nesting provide a mechanism for queries to obtain desired media content and information about the media content. Examples of media providers for music queries can include, but are not limited to, playlists, albums, genre, artist, and tracks. Such queries can be used with media sync processes from the system to a destination device, which can include operation of various different approaches to providing autofill sync processes based on information about the user and various different approaches to provide a user with a selection of media content tailored to the user.

In an example embodiment, a query in a system can be conducted by specifying a specific media ID type, which results in the collection of the instances of this specific media ID type in the library for the system. For example, a query of a specific music performing artist can result in identification of all music performing artists in the system, as an intermediate result. Then, within the list of identified music performing artists, the unique ID for the specific music performing artist is determined, which can result in the identification of the albums, folders, tracks etc in the system for which the specific identified music performing artist is a performer. In another query, the media type, music performing artist, can be specified. Associated with music performing artist is a unique media ID type, which can be generated initially from examining the query and accessing a source that stores the correspondence of music performing artist with its unique media ID type. Then, with this unique media ID type, the collection of music performing artist that have media content in the library for the system can be produced. Alternatively,if a specific media ID type is used in a query in a system in which the specific media type is not stored in the system and its associated library, the query can result in an empty set.

The system can include tables correlating the type of media element with the corresponding unique ID type, or other means of making the correspondence of media type with a unique ID. Such a mechanism can be updated as new media content is collected in the library of the system and/or new media types are generated for use in the system.

Structure 500 can be used in generating a sync set associated with media content to be transferred to a destination device, such as a mobile wireless communication device. The information in the sync set provides a file that can be transferred to the destination and stored on the destination device as its media sync file reflecting the media content on the destination device. The application of structure 500 is not limited to music media, but can be applied to other high level media types such as video, photo, e-books, etc.

Structure 500 allows information from various sources accessible to a system to be utilized to present a user with the ability to create media files for transfer to the user's mobile wireless device, tailored to the user's personal preferences. Based on user information in the system, a virtual collection of media selections can be presented to the user as downloadable to the mobile wireless device. This collection is virtual in that the media selections need not reside on the system as a stored collection but may be combined upon a selection by the user. The collection can be determined by evaluating user preferences to generate characteristics to query the libraries accessible to the systems. The characteristics can be correlated to one or more unique media ID types to locate individual media files that meet the desired characteristics. An album can be created containing these media files identified by the query, based on the one or more unique media ID types selected from characteristics corresponding to one or more sets of user preferences Through a user interface, a user can be allowed to select from the virtual selections in the collection to complete formation of a virtual album. Using data about the virtual selection, downloading of the selected media files can be commenced.

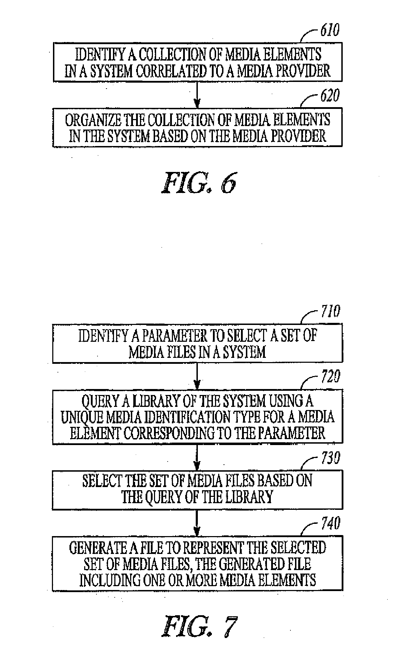

Figure 6 shows an embodiment of features of a method of operating with respect to media files in a system, At 610, a collection of media elements in a system correlated to a media provider is identified. Each media element has a unique media identification type and a media location. The media provider for the collection can be represented as a media elements. The representation of a media element of the collection can include a representation of metadata associated with the respective media element along with the unique media identification type and media location of the media element.

At 620, the collection of media elements in a system, based on the media provider, are organized. The representation of the media provider can be organized to include a unique media identification type for the media provider, a media location for the media provider, and the media identification type and media location of each media element of the collection as part of the representation of the media provider. In an example embodiment, the media provider can be a music album and the media elements can include song tracks. In an example embodiment, the media provider can be a video album and the media elements can include movies of a specified actor. In an example embodiment, the media provider can be a movie library and the media elements can include movies of a specified genre. In an example embodiment, the media provider can be a unified library, where the unified library is configured as-a library for media content of all media types stored in the system.

Figure 7 shows an embodiment of features of a method of operating with respect to media files in a system. At 710, a parameter to select a set of media files in the system is identified. In an example embodiment, the media files can correspond to at least two different types of music media players for syncing to a destination device. At 720, a library of the system is queried using a unique media ID type for a media element corresponding to the parameter. At 730, the set of media files based on the query of the library is selected. At 740, a file is generated to represent the selected set of media files. The generated file includes one or more media elements, where each media element is represented in the generated file by a unique media identification type and a media location. The one or more media elements can include a media provider represented as a media element having a unique media identification type and media location followed by unique media identification types and media locations of one or more other media elements in the generated file. The unique media identification types and the media locations of the one or more other media elements written to the generated file can be based on the media provider. In an example embodiment, the generated file can include media elements representing media items in a virtual album such that at least one of the media items is sourced from an album different than from another album from which another one of the media items is sourced.

The generated file can be formatted as a media sync file for a mobile wireless communication device selected as a destination device of a transfer (sync) process from a PC or server. The media sync file provides a unique data repository for information on media files in the destination device. Media types can be combined, while maintaining the various media types with their own individual characteristics. The characteristics can be derived from information on the destination device or a system such as a PC or a server. Information in the generated media sync file may include information about the location of the file on the destination device and/or the mapping of the information in the file to locations in the PC or server.

In various embodiments, transfer/sync of multimedia files, audio files, video files, and/or combinations thereof between a computer (and associated media managers of the computer) and a mobile wireless communications device may be accomplished using a number of mechanisms. The transfer/sync between the mobile wireless communications device and the wireless server may be accomplished through a wired USB connection or a wireless USB connection. The transfer/sync between the mobile wireless communications device and the wireless server may be accomplished through a Wi-FI communication session. The transfer/sync between the mobile wireless communications device and the wireless server may be accomplished over wide area network (WAN) such as a wireless network.

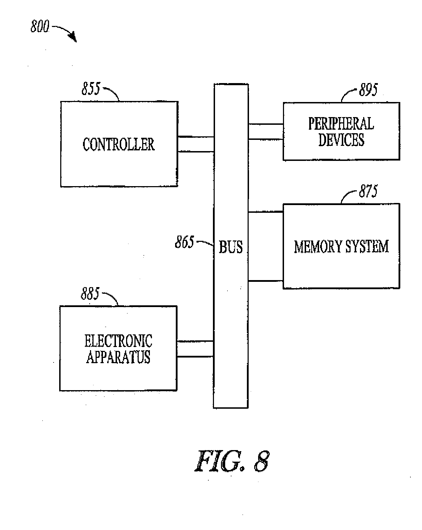

Figure 8 depicts a diagram:of an embodiment of a system 800 having a controller 855 and a memory system 875. System 800 also includes electronic apparatus 885 and a bus 865, where bus 865 provides electrical conductivity among the components of system 800. In an embodiment, bus 865 includes an address bus, a data bus, and a control bus, each independently configured. In an alternative embodiment, bus 865 uses common conductive lines for providing one or more of address, data, or control, the use of which is regulated by controller 855. Bus 865 may be realized as multiple busses. In an embodiment, electronic apparatus 885 is additional memory configured in a manner similar to memory system 875. Electronic apparatus 885 may be configured to include one or more media players. In an embodiment, additional peripheral device or devices 895 are coupled to bus 865. In an embodiment, peripheral devices 895 include displays, additional storage memory system, and/or other control devices that may operate in conjunction with controller 855 and/or memory system 875. In an embodiment, controller 855 is realized as one or more processors.

Controller 855 and memory system 875 can be arranged to manage media content and associated information on system 800. In an embodiment, system 800 is arranged as a PC. The PC may include instrumentality distributed throughout the PC to operate as a wireless server. System 800 arranged as a PC can operate according to any of the various embodiments discussed herein to manage media content and associated information within the PC and/or in conjunction with one or more mobile devices such as mobile wireless communications devices.

In an embodiment, system 800 is arranged as a mobile device. The mobile device may be a mobile wireless communications device. System 800 arranged as a mobile device can operate according to any of the various embodiments discussed herein to manage media content and associated information within the mobile device, and/or in conjunction with a PC or other apparatus having software and/or hardware to manage media content.

Various embodiments or combination of embodiments for apparatus and methods for a system, such as a PC, to manage media content, as described herein, can be realized in hardware implementations, software implementations, and combinations of hardware and software implementations. These implementation may include a machine-readable medium having machine-executable instructions, such as a computer-readable medium having computer-executable instructions, for operating the system in a relationship with one or more mobile devices such that media content and associated information are managed between the system and the mobile device. The communications of the system with a mobile wireless communications device can be conducted on a secured basis. The machine-readable medium is not limited to any one type of medium. Machine-readable storage media may include, but are not limited to, solid-state memories, optical media, and magnetic media. Non-limiting examples of machine-readable storage media include, but are limited to, hard disks, removable magnetic disks, removable optical disks (e.g:, compact disks and digital video disks), magnetic cassettes, memory cards, memory sticks, Random Access Memories (RAMs), Read Only Memories (ROMs), and other storage media.

Various embodiments or combination of embodiments for apparatus and methods for a mobile device, such as a mobile wireless communications device, as described herein, can be realized in hardware implementations, software implementations, and combinations of hardware and software implementations. These implementations may include a machine-readable medium having machine-executable instructions, such as a computer-readable medium having computer-executable instructions, for operating the mobile device to manage its media content and associated information within the mobile device, in conjunction with a system, such as a PC, and/or with respect to other mobile devices. The communications between a mobile wireless communications device and the system can be conducted on a secured basis. The machine-readable medium is not limited to any one type of medium. Machine-readable storage media may include, but are not limited to, solid-state memories, optical media, and magnetic media. Non-limiting examples of machine-readable storage media include, but are limited to, hard disks, removable magnetic disks, removable optical disks (e.g., compact disks and digital video disks), magnetic cassettes, memory cards, memory sticks, Random Access Memories (RAMs), Read Only Memories (ROMs), and other storage media.

Although specific embodiments have been illustrated and described herein, it will be appreciated by those of ordinary skill in the art that any arrangement that is calculated to achieve the same purpose may be substituted for the specific embodiments shown. Jt is to be understood that the above description is intended to be illustrative, and not restrictive, and that the phraseology or terminology employed herein is for the purpose of description. Combinations of the above embodiments and other embodiments will be apparent to those of skill in the art upon studying the above description.

## Claims

1. A method comprising:
organizing (620) a collection of media elements (540) in a system based on a media provider (545) for the collection, the media provider (545) representable as a media element (540); and
representing each media element (540) of the collection by a unique media identification type (541) and a media location (543).

2. The method of claim 1, wherein the method includes:
representing the media provider (545) by a representation that includes a unique media identification type (546) for the media provider (545) and a media location (548) for the media provider (545); and
organizing the media identification type (541) and media location (543) of each media element (540) of the collection as part of the representation of the media provider (545).

3. The method of claim 2, wherein the media provider (545) is a music album and the media elements (540) include song tracks or wherein the media provider (545) is a video album and the media elements (540) include movies of a specified actor or wherein the media provider (545) is a movie library and the media elements (540) include movies of a specified genre.

4. The method of claims 1, 2, or 3, wherein the method includes representing a media element (540) of the collection by including a representation of metadata associated with the respective media element (540) along with the unique media identification type (541) and media location (543) of the media element (540),

5. The method of claim 1, 2, or 3, wherein the method includes representing a unified library as a media provider (545), the unified library being a library for media content of all media types stored in the system.

6. The method of claim 1, the method comprising:
identifying a parameter to select a set of media files in a system;
querying a library of the system using a unique media identification type (541) for a media element (540) corresponding to the parameter;
selecting the set of media files based on the query of the library; and
generating a file to represent the selected set of media files, the generated file including one or more media elements (540), each media element (540) represented in the generated file by its respective unique media identification type (541) and media location (543).

7. The method of claim 6, wherein the one or more media elements (540) includes a media provider (545) represented as a media element (540) having a unique media identification type (546) and media location (548) followed by unique media identification types (541) and media locations (543) of one or more other media elements (540) in the generated file, the unique media identification types (541) and the media locations (543) of the one or more other media elements (540) written to the generated file based on the media provider (545).

8. The method of claim 6, wherein generating a file includes generating a file containing media elements (540) representing media files corresponding to at least two different types of music media players.

9. The method of claim 6, wherein generating a file includes generating a file containing media elements (540) representing media items in a virtual album such that at least one of the media items is sourced from an album different from another album from which another one of the media items is sourced.

10. A machine-readable storage medium (875) having instructions, which when the instructions are executed by a processor (855), cause the machine to perform operations comprising the method of any of claims 1-9.

11. A system comprising:
a processor (855);
a display (895) to operate a user interface, the display (895) operable with the processor (855); and
a machine-readable storage medium (875) having instructions, the machine-readable storage medium operably coupled to the processor (855) such that the instructions, when executed by the processor (855), cause the system to perform operations comprising the method of any of claims 1-11.

12. The system of claim 11, wherein the generated file is a media sync file transferable from the system in a sync process with a destination device (210-1, 210-2 ... 210-N,310).

13. The system of claim 11, wherein the system includes a personal computer.

14. The system of claim 13, wherein the collection of media elements (540) represents media files in a sync operation from the personal computer to a mobile wireless device (210-1,210-2...210-N,310).
